(19) Europäisches Patentamt
European Patent Office
Office européen des brevets

(11) EP 1 020 403 A1

(12) **EUROPÄISCHE PATENTANMELDUNG**

(43) Veröffentlichungstag:
**19.07.2000 Patentblatt 2000/29**

(51) Int Cl.[7]: **C01B 39/02**

(21) Anmeldenummer: **99124243.9**

(22) Anmeldetag: **04.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.01.1999 DE 19901302**

(71) Anmelder: **Degussa-Hüls Aktiengesellschaft
60287 Frankfurt am Main (DE)**

(72) Erfinder:
- **Lortz, Beata-Maria, Dr.
63607 Wächtersbach (DE)**
- **Lortz, Wolfgang, Dr.
63607 Wächtersbach (DE)**
- **Leonhardt, Wolfgang, Dr.
60314 Frankfurt am Main (DE)**
- **Grohs, Joachim
63571 Gelnhausen (DE)**
- **Klotz, Oswin
63827 Westerngrund (DE)**

(54) **Alkylhalogensilan enthaltene Zeolihpulver**

(57) Alkylhalogensilan enthaltende Zeolithpulver werden hergestellt, indem man einer wäßrigen Suspension des Zeolithpulvers, insbesondere dem nach der Fällung und Filtration des Zeolithen anfallenden und mit Wasser redispergierten Filterkuchen, Alkylhalogensilan zusetzt und die Suspension trocknet.

Die Alkylhalogensilan enthaltenden Zeolithpulver können als Builder in Wasch-, Reinigungs- und Desinfektionsmitteln eingesetzt werden.

EP 1 020 403 A1

Printed by Jouve, 75001 PARIS (FR)

## Beschreibung

Die Erfindung betrifft Alkylhalogensilan enthaltene Zeolithpulver, ein Verfahren zur ihrer Herstellung sowie ihre Verwendung.

Zeolithpulver können als Builderkomponenten in Wasch- und Reinigungsmitteln eingesetzt werden. Dabei ist es wesentlich, daß das Zeolithpulver eine definierte Teilchengröße und Teilchenstruktur aufweist. Aufgrund ihrer feinpulvrigen Erscheinung und geringen Fließfähigkeit neigen Zeolithpulver sowohl zur Brückenbildung als auch zu einer Verfestigung im Silobehälter. Dies macht den Einsatz von Fluidisiervorrichtungen notwendig.

Es ist bekannt, daß die Fließfähigkeit von Zeolithpulvern erhöht werden kann, indem man zu einer wäßrigen Suspension des Zeolith A Alkalialuminat hinzufügt, dabei einen pH-Wert von maximal 11 einstellt und die Suspension anschließend trocknet (US-A 4 405 484).

Das bekannte Verfahren weist den Nachteil auf, daß das Zeolith A Pulver reagglomeriert. Das erhaltene Pulver muß anschließend vermahlen werden, um eine der Anwendung in Waschmitteln gerechte Teilchengrößenverteilung zu erhalten.

Weiterhin ist es bekannt, daß eine Verbesserung der Fließfähigkeit von Zeolithpulvern des Typs A dadurch erreicht wird, daß man insbesondere nach der Fällung und Filtration des Zeolithen dem mit Wasser redispergierten Filterkuchen mindestens eine oberflächenaktive Substanz zusetzt und die Suspension trocknet. Als oberflächenaktive Substanz kann man anionische Tenside, nichtionische Tenside und/oder Polyethylenglykol einsetzen (EP 0 609 712).

Das bekannte Verfahren weist den Nachteil auf, daß insbesondere Builderzeolithe, die eine größere innere und äußere Oberfläche als Zeolith A aufweisen, wie z.B. Zeolith P oder Zeolith X, sehr große Mengen an oberflächenaktiven Substanzen benötigen, um den gleichen Effekt der guten Fließfähigkeit wie beim Zeolith A zu erreichen. So ist zur Verbesserung der Fließfähigkeit von Zeolith A 0,3 Gew.% eines ethoxilierten Fettalkohls mit 2 - 7 Mol Ethylenoxid nötig, um eine Fließfähigkeit von ca. 50 sec nach der Methode von Pfrengle zu erhalten. Um die gleich gute Fließfähigkeit bei Zeolith X zu erhalten ist eine Menge von 7 % des gleichen Tensids nötig. Bei Zeolith P sind 5 % notwendig (siehe Vergleichsbeispiel zu EP 0 609 712).

Builderzeolithe mit einer großen für Tenside und andere flüssige Waschmittelrezepturbestandteile erreichbaren Oberfläche (Makroporen, Mesoporen, Kapillaren und Hohlräume zwischen Kristalliten und im Zwischenkornbereich) erfahren eine zunehmende Bedeutung bei kompaktierten Waschmitteln oder Waschmittelvorprodukten, wie z. B. Extrudate, Schwergranulate oder Tabletten. Bei diesen dichten Produkten muß die Saugfähigkeit der Builderzeolithe, die zum Beispiel durch die Ölzahl charakterisiert werden kann, besonders gut sein, damit die flüssigen Waschmittelrezepturbestandteile sicher auch unter Druckbeanspruchung im Kompaktat verbleiben.

Weiterhin bekannt ist ein Verfahren zur Herstellung von mit Organosilanen oberflächenmodifizierten Zeolithen des Typs 4 A (EP 88158). Diese Organosilane weisen jedoch mindestens eine an das Siliciumatom gebundene Alkoxygruppe auf.

Der Nachteil des bekannten Verfahrens ist jedoch, daß diese Organosilantypen relativ teuer sind. Weiterhin wird die organische Abluftbelastung durch die Reaktion des Alkylalkoxysilans mit dem Zeolith unter Bildung von Alkohol bei der Sprühtrocknung der Zeolithsupension erhöht.

Gegenstand der Erfindung sind Zeolithe beziehungsweise Zeolithpulver, welche dadurch gekennzeichnet sind, daß sie mit Alkylhalogensilan behandelt sind.

Ebenso Gegenstand der Erfindung sind Zeolithpulver, welche dadurch gekennzeichnet sind, daß die Alkylhalogensilan enthalten.

Ein weiterer Gegenstand der Erfindung ist ein Verfahren zur Herstellung der Alkylhalogensilan enthaltenden Zeolithpulver, welches dadurch gekennzeichnet ist, daß man einer wäßrigen Suspension des Zeolithpulvers, insbesondere dem nach der Fällung und Filtration des Zeolithen anfallenden und mit Wasser redispergierten Filterkuchens mindestens ein Alkylhalogensilan zusetzt und die Suspension trocknet.

Erfindungsgemäß können somit mit Alkylhalogensilanen oberflächenmodifizierte, kristalline Zeolithe mit 0,01 - 5 Gew.% Alkylhalogensilan, bezogen auf die Menge der eingesetzten Zeolithe, hergestellt werden. Dabei kann mindestens ein Alkylhalogensilan zu einer wäßrigen Suspension des Zeolithpulvers, insbesondere nach der Fällung, der Filtration des Zeolithen und/oder der anschließenden Redispergierung des Filterkuchens zugesetzt werden. Die Zugabe des Alkylhalogensilans kann batchweise oder kontinuierlich erfolgen. In einer Ausführungsform der Erfindung kann man das Alkylhalogensilan dem Waschwasser, mit dem der Filterkuchen gewaschen wird, zugeben. Die wäßrige Suspension des behandelten Zeolithpulvers, insbesondere des in Wasser redispergierten Filterkuchens, kann man nach bekannten Methoden trocknen. Bevorzugt werden hierbei die Sprühtrocknung, die Spinflash-Trocknung oder die Wirbelschichttrocknung eingesetzt.

Weiterhin kann jedoch auch eine Silanisierung des Zeolithpulvers in einem Wirbelbett erfolgen. Hierzu werden insbesondere Halogensilane mit einem ausreichend hohen Dampfdruck beziehungsweise niedrigem Siedepunkt wie Dimethyldichlorsilan oder Propyltrichlorsilan in den zur Fluidisierung benötigtem Heißgasstrom eingespritzt. Auch die Anreicherung des Heißgasstromes mit dem Silan mit Hilfe einer durchströmten Rieselkolonnen ist möglich. Eine derartige Modifizierung der Zeolithoberfläche durch eine Silanisierung aus der Gasphase heraus ist aufgrund der hohen Reaktivität der Chlorsilane und dem alkalischen Verhalten der Zeolithe auch im Sprühtrockner beziehungsweise Spinflashtrockner möglich. Hierzu kann nach der eigentlichen Trocknungszone ( wo also das Wasser vollständig verdampft und nur noch Zeolithpartikel dispergiert im Gasstrom vorliegen) und vor der Filterabscheidung ein leicht verdampfbares Silan direkt eingespritzt werden. Weiterhin kann das Silan auch wie beim oben beschriebenen Wirbelbettverfahren in Form eines mit Silan bereits angereicherten Gasstromes zugeführt werden.

Die eingesetzten Organosilane können eine hydrophobe Oberfläche erzeugen und wie folgt beschrieben werden:

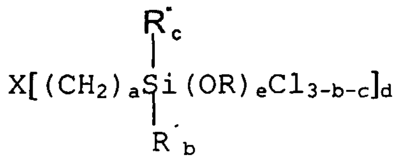

(I)

mit a = 1 bis 22
mit b = 0 oder 1
mit c = 0 oder 1
mit d = 1 oder 2
mit e = 0 bis 2;

wobei b+c+e maximal 2 betragen kann.

R=$C_1$-$C_8$-Alkyl-, gegebenenfalls verzweigt
R', R" = unabhängig voneinander $C_1$ - $C_{22}$-Alkyl geradkettig oder verzweigt, $C_1$-$C_{22}$-Alkenyl geradkettig oder verzweigt, Aryl, Benzyl, Cyclohexyl
X=H, Aryl, Alkenyl, Alkylhenyl, Cyclohexyl, Cl, F bei d = 2
X=$-(CH_2)_m-$(mit m = 0 und 1), -O-, $-S_x-$ (mit x = 1 - 6), -CO-, $-(CH_2-CH_2-O)_n-$ (mit n = 1-10)

Weiterhin können diese auch bis zu 20 % dimere und oligomere Siloxane der genannten Verbindung enthalten.

Bevorzugt werden weiterhin Chlorsilane ohne Alkoxigruppen (also e = 0), so daß keine Umweltbelastung durch gebildete Alkohole erfolgen kann, eingesetzt.

Beispiele für Silane nach Formel (I) sind Propyltrichlorsilan, Isobutyltrichlorsilan, Isobutyldimethylchlorsilan, t-Butylmethyldichlorsilan, Octyltrichlorsilan, Octyldiisobutylchlorsilan, Hexadecyltrichlorsilan, Octadecylmethoxydichlorsilan, Eicosyltrichlorsilan, Docosyltrichlorsilan, Docosylmethyldichlorsilan, Dimethyldichlorsilan, Trimethylchlorsilan, Diethyldichlorsilan.

Auch aliphatische cyclische Verbindungen wie Cyclohexylmethyldichlorsilan, (Cyclohexylmethyl)trichlorsilan sind geeignet.

Silane mit Arylgruppen sind zum Beispiel Phenyltrichlorsilan, Diphenyldichlorsilan, Phenylethyltrichlorsilan, p-(t-Butyl)phenethyltrichlorsilan, t-Butylphenyldichlorsilan, t-Butyldiphenylchlorsilan, p-Tolytrichlorsilan, Benzyldimethylchlorsilan.

Silane nach Formel (I) können auch relativ unreaktives Chlor in einer Chlor-Kohlenstoffbindung wie zum Beispiel 4-Chlorbutyldimethylchlorsilan, 2-Chlorethyltrichlosilan, 3-Chlorpropyltrichlorsilan, 3-Chlorpropylmethyldichlorsilan, Chlormethylmethyldichlorsilan, Chlorphenyltrichlorsilan aufweisen.

Beispiele für geeignete Silane mit ungesättigten Gruppen sind Allyltrichlosilan, Butenylmethyldichlorsilan, 5-Hexenyltrichlorsilan, 7-Octenyldimethylchlorsilan, Vinylphenyldichlorsilan, Vinyloctyldichlorsilan.

Beispiele für Silane nach Formel (I) und d = 2 sind 1,2-Bis(chlordimethylsilyl)ethan, 1,6-Bis(chlordimethylsilyl) octan, 1,8-Bis(chlordimethylsilyl)octan, Bis[2-(chlodimethylsilyl)ethyl]benzol.

Die Silane können sowohl einzeln als auch in Mischung eingesetzt werden. Sie können in einer Menge von 0,01 bis 5,0 Gew. %, insbesondere 0,1 bis 1,0 Gew. % eingesetzt werden.

Als Zeolithe können Zeolithe mit einem für die Waschmittelanwendung ausreichenden Calciumbindevermögen eingesetzt werden. Derartige Zeolithe weisen einen hohen Aluminiumgehalt auf und können mit folgender allgemeinen Formel beschrieben werden:

$$a\ Me_2O \cdot b\ Al_2O_3 \cdot c\ SiO_2 \cdot d\ H_2O$$

mit

Me = Na, Na und/oder K

a/b = 0,8 - 1,2

c/b = 1,8 - 5

d = 0 - 10

Zu diesen Zeolithen gehören insbesondere Zeolithe vom Typ A, Typ P und Typ X.

Die Zeolithe können ein Calciumbindevermögen von mindestens 100 mg CaO/g Zeolith aufweisen.

Als Zeolith P kann jeder beliebter Zeolith mit einem ausreichenden Calciumbindevermögen eingesetzt werden. Beispielsweise kann auch ein Zeolith P, wie er in dem Dokument EP-B O 384 070 beschrieben wird, eingesetzt werden.

Auch die Verwendung eines Zeolith P mit einem Si/Al - Verhältnis von 0,9 bis 1,5 und einem Calciumbindevermögen von kleiner 150 mg CaO/g ist möglich.

Überraschenderweise konnte nun gefunden werden, daß durch die Verwendung von Alkylhalogensilanen im Vergleich zu Alkylalkoxisilane nicht nur ein kostengünstigeres Silan, das keine organische Mehrbelastung der Abluft verursacht, eingesetzt werden kann, sondern zudem bei deutlich reduzierten Mengen eine verbesserte Fließfähigkeit erreicht wird. Weiterhin wird zusätzlich eine Erhöhung der Schüttdichte (bestimmt als "Stampfdichte") erreicht. Normalerweise würde der Einsatz von Halogensilanen aufgrund der Freisetzung von Chlorwasserstoff nicht Erwägung finden. Da jedoch gezeigt werden kann, daß bei Verwendung von Alkylhalogensilanen bereits häufig nur eine Menge von 0,2 - 0,3 Gew. % benötigt wird, um ein gut fließfähiges Produkt zu erreichen, das gebildete HCl durch restliches NaOH aus dem Zeolith-Herstellprozeß sofort in NaCl umgewandelt wird und somit keine unübliche Korrosionsgefahr gegeben ist, können Alkylhalogensilane vorteilhaft eingesetzt werden.

**Beispiel 1**

(Vergleichsbeispiel zu EP 0 609 712)

Eine Zeolith-Suspension (Zeolithgehalt 35 Gew %, bestimmt als Glührückstand, 1 h bei 800°C) von in Wasser redispergierter Zeolith A bzw. Zeolith X Filterkuchen wird mit verschiedenen Mengen eines ethoxilierten C12/C13 Oxoalkohols mit 4,5/6,0 Mol Ethylenoxid versetzt. Nach 5 Minuten Einarbeitungszeit wird die Suspension bei einer Eintrittstemperatur der Trocknungsluft von 500°C und einer Austrittstemperatur der Abluft von 110°C sprühgetrocknet. Die Fließfähigkeit des Pulvers zeigt sich am Schüttkegel und bei der Bestimmung der Fließfähigkeit nach Pfrengle an Hand der Auslaufzeit.

Die Ergebnisse sind in der Tabelle 1 aufgeführt.

So ist zur Verbesserung der Fließfähigkeit von Zeolith A 0,3 Gew.% eines C12/C13 ethoxilierten Fettalkohls mit 4,5/6,0 Mol Ethylenoxid (z.B. Neodol 23 der Fa. Shell) nötig, um eine Fließfähigkeit von ca. 50 sec nach der Methode von Pfrengle zu erreichen. Um die gleich gute Fließfähigkeit beim Zeolith X zu erhalten ist eine Menge von 7 % des gleichen Tensids nötig:

Tabelle 1

| Zeolith-Typ | Tensidmenge Neodol 23 (Gew.%) | Schüttkegelhöhe (mm) | Auslaufzeit (Pfrengle)(sec.) |
|---|---|---|---|
| Zeolith A | - | 69 | 153 |
| Zeolith A | 0,3 | 54 | 52 |
| Zeolith X | - | 72 | 157 |

Tabelle 1 (fortgesetzt)

| Zeolith-Typ | Tensidmenge Neodol 23 (Gew.%) | Schüttkegelhöhe (mm) | Auslaufzeit (Pfrengle)(sec.) |
|---|---|---|---|
| Zeolith X | 0,3 | 71 | 156 |
| Zeolith X | 5 | 60 | 95 |
| Zeolith X | 7 | 56 | 55 |

**Beispiel 2**

(Erfindungsgemäße Beispiele und Vergleichsbeispiel zu EP 88 158)

Eine Zeolith-Suspension (Zeolithgehalt 35 Gew. %, bestimmt als Glührückstand, 1 h bei 800°C) von in Wasser redispergiertem Zeolith A Filterkuchen wird sowohl mit verschiedenen Mengen Propyltriethoxisilan (PTES) als auch mit Propyltrichlorsilans (PTS) unter Rühren versetzt. Nach 5 Minuten Einarbeitungszeit wird die Suspension bei einer Eintrittstemperatur der Trocknungsluft von 500°C und einer Austrittstemperatur der Abluft von 110°C sprühgetrocknet. Die Fließfähigkeit des Pulvers zeigt sich am Schüttkegel und bei der Bestimmung der Fließfähigkeit nach Pfrengle an Hand der Auslaufzeit.

Die Ergebnisse sind in der Tabelle 2 aufgeführt.

| Silan | Silanmenge (Gew. %) | Schütt-kegelhöhe (mm) | Auslaufzeit (Pfrengle) (sec.) | Stampfdichte (g/l) | CaBV (mgCaO/g) | Ölzahl (g/100g) |
|---|---|---|---|---|---|---|
| - | 0 | 69 | 153 | 482 | 170 | 65 |
| PTES | 0,23 ≙ 0,2 PTS | 56 | 133 | 481 | 169 | 64 |
| PTES | 0,35 ≙ 0,3 PTS | 42 | 119 | 494 | 164 | 63 |
| PTES | 0,58 ≙ 0,5 PTS | 35 | 37 | 532 | 162 | 64 |
| PTES | 1,16 ≙ 1,0 PTS | 29 | 18 | 550 | 82 | 62 |
| PTS | 0,2 | 50 | 79 | 533 | 170 | 64 |
| PTS | 0,3 | 36 | 37 | 541 | 165 | 62 |
| PTS | 0,5 | 28 | 34 | 552 | 163 | 63 |
| PTS | 1,0 | 15 | 6 | 559 | 85 | 62 |

Weiterhin ist zu bemerken, daß erst bei höheren Silankonzentrationen das Calciumbindevermögen (CaBV)

wesentlich erniedrigt wird. Die Saugfähigkeit des Produktes, ausgedrückt als Ölzahl, wird hingegen auch bei höheren Silanmengen praktisch nicht beeinflußt.

Insbesondere für Builderzeolithe mit einer hohen Saugfähigkeit, wie z. B. NaX, ist der Einsatz von Alkylhalogensilanen von besonderer Bedeutung.Bereits wenige Zehntel % Mengen reichen aus, um ein gut fließfähiges Pulver zu erhalten.

**Beispiel 3**

(Beispiel NaX mit PTS)

Eine Zeolith-Suspension (Zeolithgehalt 35 Gew. %, bestimmt als Glührückstand, 1 h bei 800°C) von in Wasser redispergiertem Zeolith X Filterkuchen wird mit verschiedenen Mengen Propyltrichlorsilans (PTS) unter Rühren versetzt. Nach 5 Minuten Einarbeitungszeit wird die Suspension bei einer Eintrittstemperatur der Trocknungsluft von 500°C und einer Austrittstemperatur der Abluft von 110°C sprühgetrocknet. Die Fließfähigkeit des Pulvers wird nach Pfrengle an Hand der Auslaufzeit charakterisiert.

Die Ergebnisse sind in der Tabelle 3 dargestellt.

Tabelle 3

| Silanmenge (Gew. %) | Auslaufzeit (Pfrengle) (sec.) | CaBV (mg CaO/g) | MgBV (mg MgO/g) |
|---|---|---|---|
| - | 157 | 134 | 69 |
| 0,05 | 147 | 133 | 68 |
| 0,10 | 105 | 132 | 69 |
| 0,20 | 88 | 135 | 68 |
| 0,30 | 73 | 134 | 68 |
| 0,50 | 45 | 133 | 66 |

Hierzu ist zu bemerken, daß das Calciumbindevermögen (CaBV) und auch das Magnesiumbindevermögen (MgBV) durch den Silanzusatz nicht negativ beeinflußt werden.

Methodenbeschreibung

Die beschriebenen Produkteigenschaften werden wie folgt ermittelt:

Das Fließverhalten kann anhand der Schüttkegelmethode, die in der Schriftenreihe Pigmente, Nr. 31, 4. Auflage 11/1981, von Degussa AG publiziert wurde, bestimmt werden. Je niedriger die Schüttkegelhöhe ist, desto besser ist die Fließfähigkeit des Pulvers.

Eine andere Methode zur Beurteilung der Fließfähigkeit ist die Ermittlung der Auslaufzeit nach Pfrengle. Hierzu werden 20 g des Zeolithpulvers in ein Becherglas eingewogen und in den Trichter des Pfrengle-Gerätes gegeben. Die Auslauföffnung des Trichters war dabei zum Beispiel mit der Hand verschlossen. Die Auslauföffnung wird nun freigegeben und während des Auslaufens des Pulvers mit einem motorbetriebenen Rührer mit 1 U/sec. gerührt, bis das gesamte Pulver durchgelaufen ist. Es wird die Zeit für den gesamten Auslaufvorgang bestimmt.

Pulver mit Auslaufzeiten von unter 50 Sekunden sind als sehr gut fließfähig einzustufen. Auslaufzeiten von 50 - 100 Sekunden sind für gut bis befriedigend fließfähige Pulver charakteristisch. Auslaufzeiten von über 100 Sekunden sind typisch für schlecht fließfähige Pulver. Die Bestimmung wird in Anlehnung an DIN ISO 4324 durchgeführt.

Als Qualitätsmerkmal für das Kationenaustauschvermögen des Produktes wird das Calciumbindevermögen (CaBV) bestimmt. Das CaBV gibt die von 1 g Zeolith (bezogen auf die "wasserfreie" Substanz, der Wassergehalt des Zeolithen entspricht praktischen dem Glühverlust (DIN 55 921) der Substanz, 1 h bei 800°C, im folgenden mit atro - aktivtrocken - bezeichnet) aus einem Liter wäßriger $CaCl_2$-Lösung von 30° dH (30° Deutsche Härte entspricht 300 mg CaO/l bzw. 594 mg $CaCl_2$/l) gebundene Menge Calciumionen in Milligramm Calciumoxid an. Zur Bestimmung des CaBV wird 11 der wäßrigen $CaCl_2$-Lösung, die mit verdünnter Natronlauge auf einen pH-Wert von 10 eingestellt wurde, mit 1 g Zeolith (bezogen auf "wasserfrei") versetzt. Die gebildete Suspension wird anschließend 10 Minuten bei Raumtemperatur kräftig gerührt, filtriert und im Filtrat durch komplexometrische Titration mittels Ethylendiamintetraessigsäure die Resthärte ermittelt. Das CaBV ist das zehnfache der Differenz der ermittelten ° dH.

Auch das Magnesiumbindevermögen (MgBV) ist insbesondere bei Zeolith X von Bedeutung. Das MgBV gibt die von 1 g Zeolith (bezogen auf die "wasserfreie" Substanz, der Wassergehalt des Zeolithen entspricht praktischen

dem Glühverlust (DIN 55 921) der Substanz, 1 h bei 800°C, im folgenden mit atro - aktivtrocken - bezeichnet) aus einem Liter wäßriger $MgCl_2$-Lösung von 30° dH (30° Deutsche Härte entspricht 300 mg CaO/l bzw. 216 mg MgO/l) gebundene Menge Magnesiumionen in Milligramm Magnesiumoxid an. Zur Bestimmung des MgBV wird 11 der wäßrigen $MgCl_2$-Lösung, die mit verdünnter Natronlauge auf einen pH-Wert von 10 eingestellt wurde, mit 1 g Zeolith (bezogen auf "wasserfrei") versetzt. Die gebildete Suspension wird anschließend 10 Minuten bei Raumtemperatur kräftig gerührt, filtriert und im Filtrat durch komplexometrische Titration mittels Ethylendiamintetraessigsäure die Resthärte ermittelt. Das MgBV ist das zehnfache der Differenz der ermittelten ° dH.

Die "Saugfähigkeit" wird als Ölzahl nach DIN ISO 787/5 ermittelt.

Die "Stampfdichte" wird nach DIN ISO 787/11 ermittelt.

## Patentansprüche

1. Zeolithe beziehungsweise Zeolith-Pulver,
**dadurch gekennzeichnet,** daß sie mit Alkylhalogensilan behandelt sind.

2. Zeolithpulver nach Anspruch 1
**dadurch gekennzeichnet,** daß sie Alkylhalogensilan enthalten.

3. Verfahren zur Herstellung von Alkylhalogensilan enthaltenden Zeolithpulvern nach Anspruch 1 oder 2,
**dadurch gekennzeichnet,** daß man einer wäßrigen Suspension des Zeolithpulvers, insbesondere dem nach der Fällung und Filtration des Zeolithen anfallenden und mit Wasser redispergierten Filterkuchen, mindestens ein Alkylhalogensilan zusetzt und die Suspension trocknet.

4. Verfahren zur Herstellung von mit Alkylhalogensilanen behandelten Zeolithen nach Anspruch 1 oder 2,
**dadurch gekennzeichnet,** daß man dem Waschwasser, mit dem der nach der Herstellung des Zeolithen anfallende Filterkuchen gewaschen wird, Alkylhalogensilan zusetzt.

5. Verfahren nach Anspruch 3 oder 4,
**dadurch gekennzeichnet,** daß man Zeolithe mit einem für die Waschmittelanwendung ausreichendem Calciumbindevermögen einsetzt, die einen hohen Aluminiumgehalt aufweisen und mit folgender allgemeiner Formel beschrieben werden können:

$$a\ Me_2O \cdot b\ Al_2O_3 \cdot c\ SiO_2 \cdot d\ H_2O$$

mit

Me = Na, Na und/oder K

a/b = 0,8 - 1,2

c/b = 1,8 - 5

d = 0 - 10

6. Verfahren nach Anspruch 3 oder 4,
**dadurch gekennzeichnet,** daß man als Zeolith Zeolithe des Typs A, P und/oder X einsetzt.

7. Verfahren nach Anspruch 3 oder 4,
**dadurch gekennzeichnet,** daß man als Zeolith Zeolithgemische und/oder Co-Kristallisate des Typs A,P und/oder X einsetzt.

8. Verfahren nach Anspruch 3,

**dadurch gekennzeichnet,** daß das verwendete Silan beziehungsweise die Silane einer Mischung folgender Formel entsprechen:

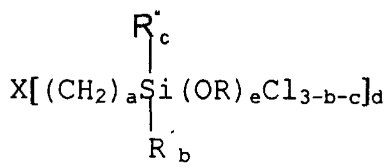

mit a = 1 bis 22
mit b = 0 oder 1
mit c = 0 oder 1
mit d = 1 oder 2
mit e = 0 bis 2;

wobei b+c+e maximal 2 betragen kann.

R=$C_1$-$C_8$-Alkyl-, gegebenenfalls verzweigt
R', R" = unabhängig voneinander $C_1$ - $C_{22}$-Alkyl geradkettig oder verzweigt, $C_1$-$C_{22}$-Alkenyl geradkettig oder verzweigt, Aryl, Benzyl, Cyclohexyl
X=H, Aryl, Alkenyl, Alkylphenyl, Cyclohexyl CL,F bei d = 2,
X=-$(CH_2)_m$-(mit m = 0 und 1), -O-, -$S_x$- (mit x = 1 - 6), -CO-, -$(CH_2$-$CH_2$-$O)_n$- (mit n = 1-10)

**9.** Verfahren nach Anspruch 3 oder 4,
**dadurch gekennzeichnet,** daß die Silane in Mengen von 0,01 bis 5,0 Gew. %, vorzugsweise 0,05 bis 2,0 Gew. %, insbesondere 0,1 - 1,0 % zugesetzt werden.

**10.** Verfahren nach Anspruch 3 oder 4,
**dadurch gekennzeichnet,** daß das verwendete Silan Propyltrichlorsilan ist.

**11.** Verfahren nach Anspruch 3,
**dadurch gekennzeichnet,** daß man die wäßrige Suspension des Zeolithpulvers, insbesondere den redispergierten Filterkuchens mittels Sprühtrocknung trocknet.

**12.** Verfahren nach Anspruch 3,
**dadurch gekennzeichnet,** daß man die wäßrige Suspension des Zeolithpulvers, insbesondere den redispergierten Filterkuchen, mittels einer Spinflashtrocknung trocknet.

**13.** Verfahren nach Anspruch 3,
**dadurch gekennzeichnet,** daß man die wäßrige Suspension des Zeolithpulvers, insbesondere den redispergierten Filterkuchen, mittels einer Wirbelschichttrocknung trocknet.

**14.** Verfahren zur Herstellung der Zeolithe beziehungsweise Zeolithpulver nach Anspruch 1 oder 2,
**dadurch gekennzeichnet,** daß man die Behandlung mit Silan auch aus der Gasphase in einem Wirbelbett oder Sprühtrockner nach der Trocknungszone vor dem Produktfilter durchführt.

**15.** Verwendung des Alkylhalogensilan enthaltenden Zeolithpulvers gemäß Anspruch 1 oder 2 als Builder in Waschmitteln, Reinigungs- und Desinfektionsmittel.

Europäisches Patentamt

# EUROPÄISCHER RECHERCHENBERICHT

Nummer der Anmeldung
EP 99 12 4243

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | EP 0 088 158 A (DEGUSSA) 14. September 1983 (1983-09-14) * Anspruch 1 * | 1 | C01B39/02 |
| A | US 4 451 572 A (CODY IAN A) 29. Mai 1984 (1984-05-29) * Spalte 3, Zeile 60 - Spalte 4, Zeile 19 * | 1 | |
| A | US 4 138 363 A (HERTZENBERG ELLIOT P ET AL) 6. Februar 1979 (1979-02-06) * Spalte 1, Zeile 49 - Spalte 3, Zeile 63 * | 1 | |
| A | DATABASE WPI Section Ch, Week 198844 Derwent Publications Ltd., London, GB; Class J01, AN 1988-312116 XP002134705 & JP 63 230515 A (JGC CORP), 27. September 1988 (1988-09-27) * Zusammenfassung * | 1 | |
| A | DATABASE WPI Section Ch, Week 198715 Derwent Publications Ltd., London, GB; Class E11, AN 1987-104945 XP002134706 & JP 62 052125 A (JGC CORP), 6. März 1987 (1987-03-06) * Zusammenfassung * | 1 | |

RECHERCHIERTE SACHGEBIETE (Int.Cl.7)
C01B

Der vorliegende Recherchenbericht wurde für alle Patentansprüche erstellt

| Recherchenort | Abschlußdatum der Recherche | Prüfer |
|---|---|---|
| BERLIN | 3. April 2000 | Clement, J-P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 99 12 4243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2000

| Im Recherchenbericht angeführtes Patentdokument | Datum der Veröffentlichung | Mitglied(er) der Patentfamilie | Datum der Veröffentlichung |
|---|---|---|---|
| EP 0088158 A | 14-09-1983 | DE 3208598 A | 22-09-1983 |
| | | JP 1613602 C | 15-08-1991 |
| | | JP 2039447 B | 05-09-1990 |
| | | JP 58167423 A | 03-10-1983 |
| | | US 4454056 A | 12-06-1984 |
| US 4451572 A | 29-05-1984 | US 4390414 A | 28-06-1983 |
| | | JP 1746045 C | 25-03-1993 |
| | | JP 4028418 B | 14-05-1992 |
| | | JP 59173137 A | 01-10-1984 |
| | | AU 554542 B | 28-08-1986 |
| | | AU 1176183 A | 30-08-1984 |
| | | CA 1207697 A | 15-07-1986 |
| | | EP 0082019 A | 22-06-1983 |
| | | JP 1844202 C | 25-05-1994 |
| | | JP 5046399 B | 13-07-1993 |
| | | JP 58108292 A | 28-06-1983 |
| | | MX 167253 B | 12-03-1993 |
| US 4138363 A | 06-02-1979 | DE 2839830 A | 22-03-1979 |
| | | GB 2004264 A,B | 28-03-1979 |
| JP 63230515 A | 27-09-1988 | JP 2086289 C | 23-08-1996 |
| | | JP 7115865 B | 13-12-1995 |
| JP 62052125 A | 06-03-1987 | JP 1855324 C | 07-07-1994 |
| | | JP 5068414 B | 28-09-1993 |

EPO FORM P0461

Für nähere Einzelheiten zu diesem Anhang : siehe Amtsblatt des Europäischen Patentamts, Nr.12/82